(19) 

Europäisches
Patentamt
European
Patent Office
Office européen
des brevets

(11)  **EP 3 878 807 A1**

(12)  **EUROPEAN PATENT APPLICATION**

(43) Date of publication:
**15.09.2021  Bulletin 2021/37**

(51) Int Cl.:
**C01B 3/50** (2006.01)  **C01B 3/48** (2006.01)
**C01B 3/34** (2006.01)  **C10J 3/60** (2006.01)

(21) Application number: **20162983.9**

(22) Date of filing: **13.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Clariant International Ltd**
**4132 Muttenz (CH)**

(72) Inventors:
• **DREISER, Christian**
  **65795 Hattersheim (DE)**

• **WACHSEN, Olaf**
  **84518 Garching (DE)**
• **BRAND, Stefan**
  **69493 Hirschberg-Leutershausen (DE)**
• **HUNGSBERG, Maximilian**
  **64293 Darmstadt (DE)**
• **DROCHNER, Alfons**
  **65527 Niedernhausen (DE)**
• **ETZOLD, Bastian**
  **64380 Rossdorf (DE)**

(74) Representative: **Kuba, Stefan**
**Clariant Produkte (Deutschland) GmbH**
**IPM / Patent & License Management**
**Arabellastraße 4a**
**81925 München (DE)**

(54)  **PROCESS FOR THE PRODUCTION OF SYNTHESIS GAS VIA ALLOTHERMIC GASIFICATION WITH CONTROLLED CARBON DIOXIDE REDUCTION**

(57)  The present invention is directed to a process for the production of synthesis gas, in particular chemical grade synthesis gas, by allothermic gasification, preferably by plasma gasification, of carbon-containing material using a gasification gas comprising at least 2 mol% carbon dioxide, and optionally at least one gas selected from steam, oxygen, hydrogen, methane and air, wherein external energy obtained from electric power is supplied in the gasification step and wherein exhaust gas of the process comprising carbon dioxide is at least partially recycled back into the gasification step. Furthermore, the present invention is directed to a process for the production of synthesis gas downstream products, wherein the synthesis gas is produced by the inventive process and used as an intermediate product in a downstream synthesis process.

EP 3 878 807 A1

**Description**

The present invention is directed to a process for the production of synthesis gas, in particular chemical grade synthesis gas, by allothermic gasification, preferably by plasma gasification, of carbon-containing material using a gasification gas comprising at least 2 mol% carbon dioxide, and optionally at least one gas selected from steam, oxygen, hydrogen, methane and air, wherein external energy obtained from electric power is supplied in the gasification step and wherein exhaust gas of the process comprising carbon dioxide is at least partially recycled back into the gasification step. Furthermore, the present invention is directed to a process for the production of synthesis gas downstream products, wherein the synthesis gas is produced by the inventive process and used as an intermediate product in a downstream synthesis process, e.g. methanol synthesis, mixed alcohol synthesis, Fischer-Tropsch synthesis, oxo-synthesis, and methanation.

Gasification is commonly defined as thermochemical conversion of solid or liquid carbon-containing materials into a gaseous product, known as synthesis gas, which mainly consists of hydrogen ($H_2$) and carbon monoxide (CO). The conversion takes place at high temperatures with the use of a gasification agent in an oxygen starving environment. Most commonly, air, pure oxygen, steam and combinations thereof are used as gasification agents in known gasification processes. Generally, the use of air introduces nitrogen ($N_2$) in the product gases, thus considerably reducing the caloric value of the syngas due to the dilution. Typically, the gasification process produces a gas phase and a solid residue (also referred to as char or ashes).

Commonly known gasification reactor types are for example fixed-bed gasifiers (e.g. Lurgi gasifier), fluidized-bed gasifiers (e.g. Winkler generator) and entrained-flow gasifiers (e.g. entrained-flow gasifier of Koppers und Totzek).

Gasification processes are typically differentiated in direct (or autothermic) and indirect (or allothermic) processes, wherein the energy required for the endothermic gasification process can be supplied directly in an autothermic process or indirectly in an allothermic process.

Typically, in autothermic (direct) gasification a part of the carbon-containing raw material is combusted, e.g. in the same reaction chamber of the gasifier, in order to provide the necessary energy. Hence, directly operated gasifiers rely on the addition of oxygen or air and normally cannot work with pure carbon dioxide as gasification agent. Established direct gasification technologies, such as air or oxygen blown fixed bed, fluidized bed or entrained flow gasifiers, are typically operated in a range of about 800°C to 1400°C and use a oxygen containing gasification agent for conversion. Generally, the operation at high temperatures requires a burner, fuel, pipes and other installations. Required preheating of common gasifiers result in significant start-up times and are therefore only efficient when operated constantly over long-term period.

Allothermic (indirect) gasification means that the energy required for the gasification process is supplied indirectly, for example via a heat exchanger or a circulating heat carrier. Another possibility is the gasification by means of plasma, such as microwave plasma or arc torch plasmas, which may be generated by an external power source. Plasma, as highly ionized gas, contains a significant number of electrically charged particles and is classified as the fourth state of matter. As plasma contains an equal number of free positive and negative charges, it is electrically neutral. Plasma processes may be largely classified into thermal and non-thermal hot plasma processes.

Several methods and devices for the plasma conversion of materials are already known, e.g. WO 2015/051893 A1, EP 2 915 869 A1, DE 10 2011 051 906 A1, EP 1 419 220 B1. Plasma gasification of carbon-containing feedstock material using thermal plasma and arc torch plasmas are for example described in WO 2012/39751 A2 and US 2010/0199557 A1. Further, the use of microwave plasma in biomass gasification is described in WO 2018/187741.

Furthermore, so called power-to-X concepts (or also referred to as power-to-value), e.g. power-to-synthesis gas, allows the use of renewably generated electricity and safe energy supply. Further, waste-to-energy (WtE) concepts utilize the thermal energy of waste materials, e.g. by conversion as heat or convert the combustibles to electricity in a power plant. So called waste to-X (WtX) (also referred to as waste-to-value) concepts allow the use of waste materials as raw material for the production of chemicals, e.g. synthesis gas.

Common gasification technologies convert fossil raw materials, such as coal, to synthesis gas. However, with regard to the global changing raw material situation, the interest in utilization of alternatives to fossil materials is increasing, such as biomass, as $CO_2$-neutral energy and raw material, as well as waste materials. For example typical carbon-containing raw materials used as feedstock for gasification, for both power generation or production of chemicals, are coal, biomass, and waste materials. Typically, known gasification technologies are dedicated to specific raw material and narrow particle size distribution as well as low moisture content, increasing pretreatment costs and complexity.

Typically, the synthesis gas product of gasification process can be used for generating power or for producing chemicals wherein the latter requires the production of chemical grade synthesis gas. For example downstream processes for producing chemicals are catalytic synthesis reactions, such as methanol synthesis, mixed alcohol synthesis, Fischer-Tropsch synthesis, oxo-synthesis or methanation. As a rule, synthesis gas for use in downstream catalytic synthesis reactions (also referred to as chemical grade synthesis gas) requires a high ratio of $H_2$ to CO of about 2:1. Therefore, normally the ratio of $H_2$ to CO is adjusted via so called water-gas shift reaction downstream the gasification reaction. In the water-gas shift reaction the synthesis gas is brought in contact with steam, wherein the carbon monoxide reacts with steam according to $CO + H_2O \rightarrow CO_2 + H_2$ (water-gas shift reaction, WGSR).

Often the synthesis gas product contains, besides carbon monoxide (CO) and hydrogen ($H_2$), impurities, such as tars, volatile or semi-volatile organic compounds, sulfur compounds, ammonia, nitrogen oxides, sulfur oxides, hydrogen chloride and ashes. Typically, the production of chemical grade synthesis gas for use in downstream catalytic synthesis reactions requires the removal of such impurities and purification steps. High levels of impurities require cost-intense synthesis gas clean-up for further processing.

Generally, the use of carbon dioxide as gasification agent opens up the possibility of an internal $CO_2$-recyling within the gasification process, wherein such recycle holds the potential of reducing carbon dioxide emissions as carbon dioxide is fixed in the synthesis gas. Depending on the aim of the process the place of carbon dioxide formation and as a consequence the implementation of an internal $CO_2$-recyling may differ.

For example the document WO 2018/187741 describes a multi-purpose two-stage process for producing synthesis gas using a circulating fluidized bed reactor for biomass gasification and recycling of carbon rich gas stream.

Further, the document WO 2017/061482 describes a gasification process wherein a carbonaceous fuel, and a gasification agent containing $H_2$, $CO_2$ and $H_2O$ are supplied to a fluidized bed gasification furnace using aluminum oxide as a fluidization medium.

For example, the document US 9,181,509 describes a coal processing system integrated with gasification, oxy-combustion, and power plant systems. The described system includes recirculation of gases, e.g. recycled carbon dioxide, nitrogen, and gaseous exhaust for increasing the efficiencies and lowering emissions.

The document WO 2012/103997 A1 is directed to a process for the gasification and/or combustion of biomass and/or coal including an at least partial carbon dioxide separation using a combined reactor having a combustion part and a gasification part.

The document JP 2011208513 A describes an integrated coal gasification combined cycle power generation plant, wherein a portion of the exhaust gas emitted from the gas turbine is led to a carbon dioxide recovery device, and carbon dioxide is recovered and used to convey coal to the gasification furnace.

The document US 2015/0141536 A1 discloses a method for recycling $CO_2$ from biomass gasification and employing $CO_2$ as a gasifying agent for gasification. The external auxiliary energy may be a plasma torch or microwave energy. Also the process of US 2015/0141536 A1 encompasses introducing the desulfurized and decarburized syngas to a synthesis tower wherein the syngas is converted catalytically to oil products.

The publication Chaiwatanodom et al. (Thermodynamic analysis of biomass gasification with CO2 recycle for synthesis gas production, Applied Energy 114, p. 10-17, 2014) describes that the $CO_2$ produced by the reaction of CO and $H_2O$ is separated from the product gas stream and partly recycled back to the gasifier.

Most of the gasification processes described in the state of the art, such as gasification processes for power generation as well as for the production of chemicals, are operated directly and as a consequence require the addition of pure oxygen or air. Therefore, these processes are restricted in terms of overall process $CO_2$ reduction, as only a small part of $CO_2$ produced during combustion can be utilized as gasification agent utilization. Even indirectly operated gasification plants are based on an energy input by the combustion of carbonaceous material which in turn causes $CO_2$ emission. For these reasons, none of the described processes can utilize the entire formed $CO_2$ or be operated in a carbon neutral way.

A process for using biomass or waste to produce conversion products, such as synthesis gas for value-added products, is still challenging because of the above mentioned draw-backs of gasification technologies and the variations in bio-based raw material quality. Typically, the processes and plants are designed for a specific raw material.

Thus, there is a need to provide an integrated synthesis gas production that allows the controlled reduction of overall $CO_2$ emission from the process and high recycling rate in combination with high process feedstock flexibility, so that the process can be easily adapted in view of different carbon-containing starting materials. In particular process feedstock flexibility means that the process is efficient and flexible towards feedstock quality and quantity, particle size and moisture content.

One object of the present invention is to provide a gasification process that meets the above mentioned need and overcomes the drawbacks of the state of the art. In particular one object of the invention is to provide a gasification process, that is easy to implement and that uses readily available apparatus. In particular the gasification process should allow the flexible and $CO_2$-reduced allothermic conversion of waste materials into synthesis gas.

It has been surprisingly found that the object as described above can be solved by the inventive process. In particular it has been found that the desired synthesis gas ratio ($H_2$/CO ratio) as well as the amount of the synthesis gas product obtained in the gasification step can be reliably and easily adjusted for different carbon-containing feedstock materials via the adjustment of the composition of the gasification agent, wherein the gasification agent is selected from carbon dioxide, steam, oxygen, hydrogen, methane, air and mixtures thereof. For example several preferred compositions for gasification agents have been determined for the gasification of plastic waste, wherein the gasification agent may comprise at least 2 mol% and up to 70 mol.% of carbon dioxide. Further, an easy and reliable method for determining the preferred process conditions, in particular the composition of the gasification agent, has been found and verified.

The present invention is directed to a process for the production of synthesis gas by gasification of carbon-containing material comprising the steps:

a) feeding a feedstock, comprising at least one carbon-containing material, and a gasification agent, comprising at least 2 mol% carbon dioxide and optionally at least one gas, selected from steam, oxygen, hydrogen, methane and air, as feed stream into a gasifier and supplying external energy obtained from electric power, wherein a product stream comprising raw synthesis gas is generated;

b) removing the raw synthesis gas as product stream from the gasifier and optionally cooling the product stream;

c) separating the solid ingredients from the gaseous ingredients in the raw synthesis gas product stream;

d) feeding the product stream obtained in step c) into a water-gas shift reactor, optionally together with steam, wherein a part of the carbon monoxide of the synthesis gas is transformed together with steam into hydrogen and carbon dioxide and wherein a modified synthesis gas product stream is obtained;

e) optionally removing sulfur compounds, preferably hydrogen sulfide ($H_2S$) and/or carbonyl sulfide (COS), from the modified product stream in a desulfurizing step;

f) removing and separating carbon dioxide at least partially from the modified product stream obtained in step d) or e), wherein an exhaust gas comprising carbon dioxide and a separated synthesis gas product stream are obtained;

g) optionally further purification of the separated synthesis gas product stream obtained in step f);

wherein the exhaust gas comprising carbon dioxide obtained in step f) is at least partially recycled back into the gasifier in step a).

Generally, step a) of the inventive process includes supplying external energy obtained from electric power, wherein the external energy causes the gasification reaction of the feedstock, comprising at least one carbon-containing material, in the presence of the gasification agent.

Generally, the inventive process allows easily adjusting relevant process parameters according to the respective requirements, such as feedstock materials and desired synthesis gas ratio. The inventive process allows the use of different carbon-containing material, wherein the desired synthesis gas ratio and yield can be obtained by the adjustment of the composition of the gasification agent. Thus, an advantage of the inventive process is that it can flexibly be used for different carbon-containing raw materials without the need of changes in the technical equipment. The inventive process of indirect (allothermic) gasification also allows different operating conditions, such as the omission of oxygen addition.

Furthermore, an advantage of the inventive process is the controlled reduction of the $CO_2$ emission of the process, and in particular the reduction of the overall $CO_2$ emission. In particular the inventive process allows reducing of the overall $CO_2$ emission to zero or nearly to zero. In particular the external energy supplied in the gasification step a) can be obtained from renewably generated electric power (coupling as a power-to-synthesis gas process).

Furthermore, the inventive process allows the production of synthesis gas or downstream products with an improved carbon efficiency (e.g. improved yield of carbon monoxide). Preferably, the inventive process exhibits a molar yield of carbon monoxide based on the amount of carbon added into the process (carbon from external sources) via the feed stream of at least 60 %, preferably at least 80 %, more preferably at least 90 %. Preferably the molar yield of carbon monoxide based on the amount of carbon, respectively the molar flow of carbon, added in the feed stream is within the range of 60 to 100 %, preferably 80 to 99 %. The molar yield Y of carbon monoxide based on the molar amount of carbon, respectively the molar flow of carbon, added in the feed stream (feedstock + gasification agent) may be given as follows:

$$Y = \frac{\text{molar flow of CO in the synthesis gas product stream}}{\text{molar flow of C in feedstock } + \text{ molar flow of C added in gasification agent}}$$

Typically, the molar amounts are given as molar flow in a continuous process. Typically, the molar amount of carbon (C), respectively the molar flow of carbon, added via the gasification agent is directed to the freshly added gasification agent, i.e. the total amount of the gasification agent minus the amount of the recycled gasification agent, respectively the total molar flow of the gasification agent minus the molar flow of the recycled gasification agent.

Definitions

In terms of the present invention synthesis gas means a gas mixture comprising (or preferably essentially consisting of) hydrogen and carbon monoxide. In particular synthesis gas exhibits a molar ratio of hydrogen to carbon monoxide in the range of 1:1 to 2.5:1. In term of the present invention the molar ratio of hydrogen to carbon monoxide is referred to as synthesis gas ratio.

In terms of the present invention an allothermic processes, in particular an allothermic gasification (or also indirect gasification), means that the required energy for the endothermic gasification process is at least partly supplied indirectly as external energy. In particular at least 10 % of the required energy is supplied via external energy.

In terms of the present invention steam means water in the gaseous state.

In terms of the present invention ppm is based on the molar amount given in mol and means $mol/10^6$ mol (mmol/kmol). In terms of the present invention ppmw means mg/kg, ppmv means parts per million directed to volume parts (1 volume part per $10^6$ volume parts, $ml/m^3$), ppbv means parts per billion directed to volume parts (1 volume part $/10^9$ volume parts).

In terms of the present invention amounts given in % by volume are directed to normal condition (1 bar and 20 °C). In terms of the present invention the unit $mg/m^3$ (STP) means mg per normal cubic meter, referring to the gas flow at normal conditions of 1 bar and 20 °C.

Synthesis gas

The synthesis gas produced via the inventive process comprises hydrogen and carbon monoxide. Preferably, the sum of hydrogen and carbon monoxide in the produced synthesis gas is from 80 to 100 mol%, typically 80 to 95 mol%, based on the total synthesis gas. Often the synthesis gas produced in the inventive process may comprise further components besides hydrogen and carbon monoxide, such as common impurities and/or inert components. Typically, such further components may be present up to 1000 ppm. In particular the synthesis gas produced in the inventive process may comprise one or more further components besides hydrogen ($H_2$) and carbon monoxide (CO) selected from carbon dioxide ($CO_2$), methane ($CH_4$), steam, nitrogen ($N_2$), noble gases (e.g. argon), other nitrogen compounds, such as nitrogen oxides ($NO_x$), ammonia ($NH_3$), and hydrogen cyanide (HCN); sulfur compounds, e.g. hydrogen sulfide ($H_2S$), sulfur dioxide ($SO_2$), carbonyl sulfide (COS), carbon disulfide ($CS_2$), methane thiol ($CH_3SH$), thiophene, benzothiophene and/or halogen compounds, such as hydrogen chloride (HCl). Typically, such gaseous impurities in the synthesis gas may be selected from nitrogen ($N_2$), ammonia (NH3), hydrogen cyanide (HCN), and hydrogen chloride (HCl).

In a preferred embodiment the inventive process is directed to the production of chemical grade synthesis gas. In particular chemical grade synthesis gas exhibits a composition and content of impurities in such way that it can be used for typical downstream processes, such as methanol synthesis, mixed alcohol synthesis, Fischer-Tropsch synthesis, oxo-synthesis (also referred to as hydroformylation), and methanation.

Preferably, the synthesis gas produced in the inventive process as described above has synthesis gas ratio in the range of 1:1 to 2.5:1, preferably in the range of 1.5:1 to 2.1:1. Preferably, the composition of the synthesis gas, e.g. the hydrogen to carbon monoxide ratio, produced in the inventive process may be varied in view of the requirements of the specific downstream process. In particular the synthesis gas produced in the inventive process is used in a methanol synthesis process and has synthesis gas ratio in the range of 2.0 : 1 to 2.5 : 1. In particular the synthesis gas produced in the inventive process is used in a Fischer-Tropsch process and has synthesis gas ratio in the range 1.5 : 1 to 2.5 : 1, preferably 2.0 : 1 to 2.5 : 1.

Carbon-containing material

The feedstock comprising one or more carbon-containing materials may be solid and/or liquid. In particular the inventive process utilizes feeding a feedstock, comprising particulate carbon-containing material, into a gasifier together with the gasification agent. Preferably, the carbon-containing material is selected from materials comprising carbon, hydrocarbons or mixtures thereof.

In a preferred embodiment the carbon-containing material is selected from coal, biomass (e.g. wood or straw), cellulose-containing materials, lignin-containing materials, hydrocarbons, organic matter, waste material, such as municipal waste (e.g. municipal solid waste MSW), plastic solid waste materials (PSW), non-recyclable waste materials (e.g. thermographic paper), waste materials from chemical industry processes (e.g. solvents or residues) (referred to as chemical process waste materials), sludges, rubbers, and mixtures thereof.

Preferably, the inventive process is utilized as waste-to-value (WtV) process, wherein the value is for example synthesis gas or a downstream product, e.g. methanol, Fischer-Tropsch waxes, Fischer-Tropsch fuels, alcohols (from mixed alcohol synthesis), aldehydes (from hydroformylation) or methane (from methanation). In this context, a preferred embodiment is directed to a process, wherein the carbon-containing material is selected from waste materials comprising hydrocarbons, in particular selected from agricultural waste, industrial organic waste, industrial biogenic waste, and municipal waste.

Preferably the feedstock comprises at least one carbon-containing material selected from plastic solid waste (PSW), non-recyclable waste materials (e.g. thermographic paper), and waste materials from chemical industry processes (e.g. solvents or residues). More preferably the feedstock comprises at least one carbon-containing material selected from plastic solid waste (PSW). Preferably, the feedstock solely comprises one or more plastic solid waste (PSW) materials as carbon-containing materials.

In particular the inventive process allows the allothermic gasification of plastic solid waste (PSW). It is often described that plastic solid waste (PSW) is used as feedstock material in direct gasification using oxygen containing gasification agent. However, the inventive process provides a process for the indirect (allothermic) gasification of PSW using a gasification agent based on carbon dioxide, preferably comprising at least 2 mol% of carbon dioxide. In particular the composition of the gasification agent can be adjusted in view of the used plastic solid waste material and/or the desired synthesis gas ratio in the produced synthesis gas.

Plastic solid waste (PSW) is for example selected from automotive shredder residue (ASR), post-consumer plastic waste, household plastic waste, commercial plastic waste. In another embodiment the carbon-containing material is selected from non-recyclable waste materials (e.g. thermographic paper).

Often plastic solid waste is a mixture of commonly used plastic materials. Preferably the plastic solid waste used in the inventive process comprises one or more plastic materials selected from styrene polymers (e.g. GPPS, HIPS), styrene copolymers (e.g. ABS, ASA), polyesters (e.g. PBT, PET), polyvinylchloride (PVC), polyolefins (e.g. PE, PP, HDPE, LDPE, LLDPE), polyether ether ketone (PEEK), polyvinylacetate (PVA), polyurethane (PU), polyamides (e.g. PA6), acrylate polymers (e.g. PMMA), polyvinyl chloride (PVC), polyvinylidene fluoride (PVDF), polycarbonate (PC), polyoxomethylene (POM).

Preferably the plastic solid waste (PSW) used in the inventive process comprises (preferably consists of) one or more plastic materials selected from polystyrene (PS), general purpose polystyrene (GPPS), high impact polystyrene (HIPS), polybutylene terephthalate (PBT), polyethylene terephthalate (PET), polyethylene (PE), polypropylene (PP), polyether ether ketone (PEEK), and polyvinyl acetate (PVA). More preferably the plastic solid waste (PSW) used in the inventive process comprises (preferably consists of) one or more plastic materials selected from polyethylene (PE), polypropylene (PP), polystyrene (PS) and polyether ether ketone (PEEK).

In a preferred embodiment the feedstock used in the inventive process comprises only one of the above mentioned plastic materials as carbon-containing material (single-sort recycled PSW). In another preferred embodiment the feedstock material used in the inventive process comprises two or more of the above mentioned plastic materials (mixed-sort recycled PSW).

In a preferred embodiment the feedstock comprising at least one carbon-containing material, in particular PSW, used in the inventive process exhibits an atomic ratio of O:C (oxygen to carbon) in the range of 0.0 to 0.7; preferably in the range of 0.0 to 0.1; and/or an atomic ratio H:C (hydrogen to carbon) in the range of 0.4 to 2.2; preferably in the range of 1.8 to 2.2. Preferably, the feedstock comprising at least one carbon-containing material, in particular PSW, used in the inventive process, has a composition $CH_{0.4-2.2}O_{0.0-0.7}$; more preferably a composition $CH_{1.8-2.2}O_{0.0-0.1}$.

It was found that a carbon-containing material (in particular PSW) respectively a feedstock, which has a composition as described before, preferably $CH_{1.8-2.2}O_{0.0-0.1}$, can advantageously be used as feedstock in the inventive gasification process, wherein the gasification agent comprises from 2 to 70 mol% carbon dioxide, more preferably wherein the gasification agent comprises from 2 to 70 mol% carbon dioxide and from 30 to 98 mol% steam.

Typically the feedstock material may be pretreated before fed into the gasifier. In particular a feedstock comprising at least one carbon-containing material selected from is dried before feeding into the gasifier. For example the feedstock material, in particular comprising (preferably consisting of) plastic solid waste (PSW), may be reduced to small particles, e.g. by cutting, crushing, grinding. Further, the pretreatment may encompasses separating and sorting of the feedstock material.

In particular the pretreatment of the feedstock material before feeding it into the gasifier (step a) encompasses one or more steps selected from drying the feedstock material, mechanical pre-treatment, sorting out incombustibles, comminution to suitable particle size.

Typically, the feedstock material comprising at least one carbon-containing material used in the inventive process has a water content of up to 50 % by weight, preferably up to 30 % by weight, preferably in the range of 0 to 50 % by weight, preferably 0.001 to 40 % by weight. Preferably, the carbon-containing material is selected from plastic solid waste material and has a water content of up to 5 % by weight, preferably up to 1 % by weight, more preferably in the range of about 0 to 1 % by weight.

Step a - Gasification

The gasification step a) of the inventive process encompasses feeding a feedstock, which comprises at least one carbon-containing material, and a gasification agent as feed stream into a gasifier and supplying external energy obtained from electric power, wherein a product stream comprising raw synthesis gas is generated.

Typically, the at least one carbon-containing material used as feedstock may be in solid and/or liquid form. In a preferred embodiment the carbon-containing material used as feedstock in the inventive process is in solid form.

The feedstock and the gasification agent may be fed into a gasifier separately, i.e. as at least two feed streams. Further, the feedstock and the gasification agent may be combined and fed into a gasifier together, i.e. as one feed stream. The gasification agent can include one or more gasification gas streams, which can for example comprise fresh gasification agents or recycled gasification agents, and which can for example be fed separately or as a combined gas stream into the gasifier, and which can have the same of different chemical composition.

According to the invention, the gasification agent comprises at least 2 mol% carbon dioxide and optionally at least one gas, selected from steam, oxygen, hydrogen, methane and air. Preferably, the gasification agent comprises at least 2 mol% carbon dioxide and optionally at least one gas, selected from steam, oxygen, hydrogen and methane. Preferably, the gasification agent comprises from 2 to 70 mol% carbon dioxide and from 30 to 98 mol% of at least one gas, selected from steam, oxygen, hydrogen, methane and air; preferably selected from steam, oxygen, hydrogen and methane; more preferably selected from steam, hydrogen and methane, more preferably steam.

In a preferred embodiment the gasification agent comprises (preferably consists of):

2 to 70 mol%, preferably 5 to 65 mol%, more preferably 20 to 60 mol%, of carbon dioxide;
30 to 98 mol%, preferably 35 to 95 mol%, more preferably 40 to 80 mol%, of steam;
0 to 30 mol% of oxygen;
0 to 30 mol% of hydrogen;
0 to 30 mol% of methane; and
0 to 5 mol% of further components, preferably further gaseous components.

In a preferred embodiment the gasification agent comprises (preferably consists of):

2 to 70 mol%, preferably 5 to 65 mol%, more preferably 20 to 60 mol%, of carbon dioxide;
30 to 98 mol%, preferably 35 to 95 mol%, more preferably 40 to 80 mol%, of steam; and
0 to 5 mol%, preferably 0 to 2 mol%, more preferably 0 to 1 mol%, of further gaseous components, preferably selected from oxygen, hydrogen, methane, carbon monoxide and gaseous impurities, e.g. impurities comprising sulfur compounds and/or nitrogen compounds.

In a preferred embodiment the gasification agent comprises (preferably consists of):

2 to 70 mol%, preferably 5 to 65 mol%, more preferably 20 to 60 mol%, of carbon dioxide;
30 to 98 mol%, preferably 34.9999 to 94.9999 mol%, more preferably 39.999 to 79.999 mol%, of steam; and
0 to 5 mol%, preferably 0.0001 to 2 mol%, more preferably 0.001 to 1 mol%, of further gaseous components, preferably selected from oxygen, hydrogen, methane, carbon monoxide and gaseous impurities, e.g. impurities comprising sulfur and/or nitrogen.

In a more preferred embodiment the gasification agent essentially consists of:

2 to 70 mol%, preferably 5 to 65 mol%, more preferably 20 to 60 mol%, of carbon dioxide; and
30 to 98 mol%, preferably 35 to 95 mol%, more preferably 40 to 80 mol%, of steam.

Typically, the gasification agent may comprise impurities, in particular gaseous impurities, in the ppb or ppm range, for example in the amount of 0.001 ppm to 100 ppm. Typically, such impurities are selected from sulfur compounds, nitrogen compounds and halogen compounds, such as hydrogen sulfide ($H_2S$), sulfur dioxide ($SO_2$), carbonyl sulfide (COS), carbon disulfide ($CS_2$), methane thiol ($CH_3SH$), thiophene, benzothiophene, ammonia ($NH_3$), hydrogen cyanide (HCN), hydrogen chloride (HCl). Typically, such gaseous impurities may be inert gases, such as nitrogen or noble gases (e.g. argon), carbon monoxide, hydrocarbons, and/or the sulfur compounds and/or nitrogen compounds mentioned above.

Further, the synthesis gas may comprise particulate impurities, e.g. particulate carbon-containing materials, tar, carbon.

Further, the gasification agent may comprise carbon monoxide in an amount of from 0 to 30 mol%, preferably of from 0.0001 to 10 mol%.

Preferably, the gasification agent comprises less than 1 mol%, preferably less than 0.1 mol% of oxygen. Preferably, the gasification agent comprises less than 1 mol%, preferably less than 0.1 mol%, of nitrogen.

In a preferred embodiment the molar amount of carbon dioxide added into the inventive process via the gasification agent comprises at least 50 mol%, preferably 80 to 100 mol%, more preferably 90 to 100 mol%, of recycled carbon dioxide, which is obtained via the exhaust gas in step f). In a more preferred embodiment the molar amount of carbon dioxide added into the inventive process via the gasification agent comprises 100 mol% of recycled carbon dioxide (resulting from the recycled exhaust gas obtained in step f) and optionally from an external carbon dioxide source (e.g. from step h described below).

Preferably, the gasification agent may comprise methane obtained from bio gas production.

In a preferred embodiment of the invention the feed stream, which is used in gasification step a) and which comprises the feedstock, which preferably comprises (more preferably consists of) at least one plastic solid waste material (PSW), and the gasification agent, exhibits an atomic ratio of O:C in the range of 1.0 to 1.7; preferably in the range of 1.2 to 1.5; and/or an atomic ratio H:C in the range of 2.0 to 4.0; preferably in the range of 3.0 to 3.4. Preferably, the feed stream has a composition $CH_{2.0-4.0}O_{1.0-1.7}$; more preferably a composition $CH_{2.7-3.7}O_{1.1-1.6}$, also preferably a composition $CH_{3.0-3.4}O_{1.2-1.5}$, most preferably a composition of about $CH_{3.2}O_{1.4}$. Said preferred compositions of the feed stream are also referred to as operational compositions. It has been found that the preferred composition of the feed stream as described before can advantageously be used in a gasification process, wherein the gasification agent comprises from 2 to 70 mol% carbon dioxide.

In a preferred embodiment the external energy supplied in step a) is obtained from electric power generated by renewable energy). More preferably the renewable energy for generating the electric power is based on biomass, waste heat streams, hydroelectricity, wind power, geothermal energy, solar energy (e.g. photovoltaic electricity, solar thermal power, concentrated solar power). Preferably, the external energy supplied in step a) is obtained from surplus energy that is obtained from electric power generated by renewable energy. In particular the external energy supplied in step a) is obtained by Demand Site Management (power-to-X process).

In a preferred embodiment the external energy is supplied in the gasifier in step a) in form of a plasma, preferably an arc plasma. In this preferred embodiment the inventive process is directed to the production of synthesis gas by plasma gasification of carbon-containing material. The utilization of plasma as external power source can be advantageous due to higher flexibility as the external power source can be adapted depending on the carbon containing raw material and the process conditions.

Generally, a plasma is defined as an ionized gas, which contains a significant number of electrically charged particles (ions and electrons) and is classified as the fourth state of matter. Typically, a plasma is electrically conductive and it is electrically neutral, as plasma contains an equal number of free positive and negative charges. The degree of ionization can typically be less than 1 % or up to 100 %. Typically, a plasma can be generated by suppling external energy, e.g. in form of thermal energy, strong electro-magnetic fields, into a gas in the ground state.

Generally, the plasma used in gasification step a) may be a non-thermal plasma or a thermal plasma. Typically, a non-thermal plasma or also referred to as non-equilibrium plasma is a plasma that is not in a thermodynamic equilibrium due to the different temperature of the different particle species (electrons and heavy species, i.e. neutrals, ions). Generally, a thermal plasma or also referred to as equilibrium plasma is a plasma that is in a thermodynamic equilibrium due to the same temperature of the different particle species.

More preferably the gasification is carried out in step a) using a plasma as external energy and at a temperature in the range of 1,400 K to 1,800 K.

Preferably, the plasma used in the gasification of the inventive process may be generated by using various commonly known methods, such as by using an arc plasma torch, gliding arc discharge, a plasma pencil, a plasma needle, a plasma jet, a dielectric barrier discharge, a resistive barrier discharge, a piezoelectric direct discharge, a glow discharge or a microwave plasma generation.

In a preferred embodiment the external energy is supplied in form of an arc plasma in the gasification step a). Arc plasma (electrical arc plasma) is defined as a plasma generated in an electrical arc, via electrical discharge and ionization of a gas. Generally, plasma torches for arc plasma generation are commonly known by a skilled person (e.g. from Westinghouse Plasma Corporation).

Preferably the external energy is supplied in the gasifier in step a) in form of plasma, preferably an arc plasma generated by a plasma torch operated in the power range of 80 to 4000 kW, preferably 300 to 3000 kW.

Preferably the gasification in step a) is carried out at a temperature in the range of 500 K to 2,000 K, preferably from 500 to 1,800 K, more preferably from 700 to 1,600 K (operational temperature).

In a preferred embodiment the gasification is carried out at a temperature in the range of 1,200 K to 2,000 K, preferably of 1,300 K to 1,800 K, wherein the external energy is supplied in the gasifier in step a) in form of a plasma, preferably an arc plasma. It has been found that the plasma gasification process is less temperature sensitive at a gasification temperature at 1400 K or above, resulting in improved process tolerance. In a preferred embodiment the gasification is carried out at a temperature above 1,400 K, preferably in the range of 1,400 to 1,800 K, wherein the external energy is supplied in the gasifier in step a) in form of a plasma, preferably an arc plasma.

The temperature given above for the gasification in step a) is directed to the gas temperature of the product stream leaving the gasifier in step a) said temperature can also be referred to as operational temperature in gasification step a).

Typically, the core temperature of the plasma can be more than 2,000 K, for example the core temperature of the plasma can be in the range of 5,000 to 50,000 K in an arc plasma.

For example the gasification reaction in step a) can be carried out using commonly known types of gasifiers, for examples fluidized-bed gasifiers, fixed-bed gasifiers or entrained-flow gasifiers or combinations thereof.

In a preferred embodiment the raw synthesis gas obtained in the gasification step a) exhibits a synthesis gas ratio (molar $H_2/CO$) in the range of 1 : 1 to 2.1 : 1, preferably 1 : 1 to 1.5 : 1.

Step b - Removing the product stream from the gasifier and optionally cooling the product stream

Typically, ash and unconverted solids are collected at the bottom of the gasifier and purged from the process, while the gaseous products including typically some solid ingredients (dust) exit the reactor through a tube.

Preferably, the raw synthesis gas product stream removed from the gasifier is subjected to rapid cooling after gasification step b. More preferably, the raw synthesis gas product stream is cooled down to a temperature in the range of 250 °C to 450 °C after gasification step b.

Step c - Removal of solids

The inventive process encompasses in step c) the separation of the solid ingredients from the gaseous ingredients in the raw synthesis gas product stream which is removed from the gasifier in step b).

For example, solid ingredients in the raw synthesis gas may originate from the ash of the feedstock, dust, unconverted carbon, soot and carry-over bed material in the case of fluidized bed gasifiers.

Generally, step c) of the inventive process may be performed by guiding the raw synthesis gas product stream through a filter means separating the solid ingredients from the gaseous ingredients or by reversing the flow direction of the gaseous ingredients and collecting the solid ingredients.

Several methods to remove solid (particulate) ingredients from gases are known in the state of the art and can be applied in the inventive process. Preferably, one or more of the following methods and devices may be used in the inventive process: cyclones, filters (e.g. moving bed filters, ceramic filter candles), electrostatic filters (ESP), and (solvent) scrubbers. More preferably a cyclone separator and/or a particulate filter are used.

Typically the separation of the solid ingredients in step c) can be carried out at high temperatures (e.g. cyclones, moving bed filters, ceramic filter candles) or at low temperatures (scrubbers, wet electrostatic precipitators). Suitable scrubbers are mentioned below in connection with step e).

Preferably, a combination of one or more of the separation methods and device as mentioned above is utilized in the inventive process.

Typically, the solid ingredients separated in step c) are purged from the process as ashes.

Step d - Water-gas shift reaction

The inventive process encompasses in step d) feeding the product stream obtained in step c) into a water-gas shift reactor, optionally together with steam, wherein a part of the carbon monoxide of the synthesis gas is transformed together with steam into hydrogen and carbon dioxide and wherein a modified synthesis gas product stream is obtained.

Step d) encompasses the transformation of at least a part of the carbon monoxide into hydrogen and carbon dioxide according to the water-gas shift reaction according to $CO + H_2O \rightarrow CO_2 + H_2$; wherein a modified synthesis gas product stream is obtained. The water required for said water-gas shift reaction can partially or completely be included in the product stream, which is fed into the water-gas shift reactor. In another embodiment the product stream obtained in step c) is fed into a water-gas shift reactor together with steam.

In particular known catalysts for water-gas shift reaction and/or sour water-gas shift reaction are used in the water-gas shift step d).

Preferably, the synthesis gas has a synthesis gas ratio ($H_2/CO$) in the range from 1:1 to 2.5:1, preferably from 1.5:1 to 2.2:1, more preferably about 2:1, after the water-gas shift reaction in step d).

Generally, the process of water-gas shift reaction and apparatus therefore are commonly known and described in the state of the art, e.g. Ullmann's Encyclopedia of Industrial Chemistry, Wiley-VCH, 2011, Vol. 16, p. 483-493, Gas Production, 3. Gas Treating, Boll et al.

In a preferred embodiment the water-gas shift reaction (step d) is carried out as a sour water gas shift reaction (sometimes also termed "sulfided CO shift"). According to this preferred embodiment, step d) of the inventive process encompasses feeding the product stream obtained in step c) into a water-gas shift reactor, optionally together with steam, wherein a part of the carbon monoxide of the synthesis gas is transformed together with steam into carbon dioxide and hydrogen ($CO + H_2O \rightarrow CO_2 + H_2$) and wherein at least a part of the organic sulfur compounds, in particular carbonyl sulfide (COS), which are comprised in the synthesis gas (typically as an impurity) are transformed together with steam into hydrogen sulfide ($H_2S$) (e.g. $COS + H_2O \rightarrow CO_2 + H_2S$). Typically, the organic sulfur compounds, in particular carbonyl sulfide (COS), which are comprised in the synthesis gas, are nearly completely transformed into hydrogen sulfide. According to this embodiment, preferably the subsequent desulfurizing step e) encompasses removing of hydrogen sulfide predominantly. Commonly known catalysts can be used in the sour water-gas shift reaction, e.g. cobalt-molybdenum based catalysts.

Step e - Desulfurizing step

Preferably, the inventive process comprises a desulfurizing step e), wherein sulfur compounds are removed from the modified product stream, which is obtained in water-gas shift reaction (step d). As sulfur compounds, such as hydrogen sulfide ($H_2S$) and sulfur dioxide ($SO_2$), as well as organic sulfur compounds, e.g. carbonyl sulfide (COS), carbon disulfide ($CS_2$), methanethiol ($CH_3SH$), thiophene, and benzothiophene, are often harmful to catalysts, for example such as used in downstream synthesis processes, it is often necessary to remove sulfur compounds from the synthesis gas product.

Preferably, hydrogen sulfide ($H_2S$) is removed at least partially, preferably nearly completely, from the modified product stream in the desulfurizing step e) wherein the water-gas shift reaction step d) is carried out as a sour water gas shift reaction.

Typically, the desulfurizing step e) can be carried out using known wet and/or dry processes. Suitable process and apparatus are known in the state of the art. Typically, the desulfurizing step e) can be carried out in a gas scrubber. Types of gas scrubbers are commonly known and described in the state of the art. Examples of suitable gas scrubbers are tower scrubbers, jet scrubbers, swirl scrubbers, rotation scrubbers, and venturi scrubbers.

Generally, such adsorption and adsorption processes are known by a skilled person and described in the state of the art, e.g. Ullmann's Encyclopedia of Industrial Chemistry, Wiley-VCH, 2011, Vol. 16, p. 498-535, Gas Production, 3. Gas Treating, Boll et al.

Step f - Removal of $CO_2$

The inventive process encompasses in step f) removing and separating the carbon dioxide at least partially from the modified product stream obtained in step d) or e), wherein an exhaust gas comprising carbon dioxide and a separated synthesis gas product stream are obtained.

Typically, carbon dioxide can be removed from the synthesis gas product stream by chemical and physical absorption with at least one liquid solvent or by adsorption with at least one solid adsorbent. In particular the choice for chemical or physical absorption or a combination of both depends on the partial pressure of carbon dioxide in the product stream.

Examples of suitable liquid solvents comprise the liquid solvents and their combinations as mentioned above in connection with the desulfurizing step e), for example substituted amines (e.g. monoethanolamine (MEA), diethanolamine (DEA), methyldiethanolamine (MDEA)), methanol, polyethylene glycol, water, aqueous solutions of alkaline hydroxide, and aqueous solutions of alkaline carbonate.

Examples of suitable solid adsorbent materials comprise silica gel, active carbon, zeolites, and molecular sieves. Typically, the adsorption takes place at low temperatures and high pressures and the regeneration of the carbon dioxide may take place either by higher temperature (Thermal Swing Adsorption TSA) or lower pressure (Pressure Swing Adsorption PSA). Often, residues of $H_2S$ can be removed in these processes as well.

It is also possible to remove $CO_2$ from the synthesis gas by a membrane process.

Generally, such adsorption and adsorption processes are known by a skilled person and described in the state of the art, e.g. Ullmann's Encyclopedia of Industrial Chemistry, Wiley-VCH, 2011, Vol. 16, p. 498-535, Gas Production, 3. Gas Treating, Boll et al.

In a preferred embodiment, the desulfurizing step e) and the removal of carbon dioxide in step f) is carried out by wet gas scrubbing, in particular an amine gas scrubbing, together in one unit, preferably in two or more washing steps.

Typically, the concentration of carbon dioxide in the synthesis gas product stream is equal or less than 1 mol%, preferably less than 0.1 mol% after step f).

Typically, 80 to 99 mol%, preferably 90 to 98 mol% of the amount of $CO_2$ comprised in the modified product stream obtained in step d) or e) is removed in step f) and at least partially recycled. Typically, the carbon capture efficiency in step f) is from 80 to 99 %, preferably 90 to 98 mol%.

According to the invention the exhaust gas comprising carbon dioxide obtained in step f) is at least partially recycled back into the gasifier in step a). Preferably, 30 to 100 mol%, preferably 50 to 100 mol%, also preferably 70 to 100 mol%, more preferably 80 to 100 mol%, most preferably 85 to 100 mol%, of the exhaust gas comprising carbon dioxide obtained in step f) is recycled into the gasifier in step a).

In a preferred embodiment the exhaust gas comprising carbon dioxide obtained in step f) is completely recycled back into the gasifier in step a).

In case that the amount of carbon dioxide, added into the inventive process via the gasification agent, is greater than the total amount of carbon dioxide, obtained via the exhaust gas comprising carbon dioxide obtained in step f), it is possible to add carbon dioxide from an external source of carbon dioxide and to use the inventive process as carbon sink.

In a preferred embodiment the exhaust gas comprising carbon dioxide obtained in step f) is completely recycled back into the gasifier in step a) and further exhaust gas comprising carbon dioxide obtained from a downstream synthesis process, preferably selected from methanol synthesis, mixed alcohol synthesis, Fischer-Tropsch synthesis, oxo-synthesis, and methanation, is at least partially recycled back into the gasifier in step a).

Preferably, the gasification agent may comprises up to 10 mol%, based on the total amount of the gasification agent, preferably up to 5 mol%, more preferably up to 3 mol%, of carbon dioxide from fresh carbon dioxide obtained from external source (for example from a downstream synthesis process of step h) as described below).

Preferably, the inventive process exhibits a carbon dioxide ($CO_2$) emission, based on the molar amount (or molar flow) of carbon monoxide (CO) obtained via the synthesis gas product, of equal or less than 50 %, preferably equal or less than 30 %, more preferably equal or less than 10 %. In a preferred embodiment the carbon dioxide ($CO_2$) emission, based on the molar amount of carbon monoxide (CO) obtained via the synthesis gas product, is from 0 to 30 %, more preferably from 0 to 10 %, most preferably 0 %. Preferably, the carbon dioxide emission ($CO_2$ emission per mole CO) may be given as follows:

$$CO2\ emission =$$

$$\frac{Molar\ flow\ of\ CO2\ obtained\ in\ the\ process\ -\ Molar\ flow\ of\ recycled\ CO2}{Molar\ flow\ of\ CO\ in\ the\ synthesis\ gas\ product\ stream}$$

Typically, the molar amounts are given as molar flow in a continuous process. Preferably, the "molar flow of $CO_2$ obtained in the process" in a continuous process is the molar flow of $CO_2$ in the synthesis gas product stream after step d) or e) and before step f). Preferably, the "molar flow of recycled CO2" is the molar flow of $CO_2$ in the exhaust gas comprising carbon dioxide obtained in step f), which is recycled back into the gasifier. Preferably, the "molar flow of CO in the synthesis gas product stream" is the molar flow of CO in the synthesis gas product stream obtained in step f) or g).

Step g -Further purification

Optionally, the inventive process comprises a further purification of the separated synthesis gas product stream obtained in step f).

Preferably, further purification of the synthesis gas product stream may be necessary to fulfill the requirements for chemical grade synthesis gas that can be used in a downstream synthesis reaction, in particular a catalytic downstream synthesis reaction. Typically, such further purification includes the removal or reduction of contaminants, such as chlorine compounds (e.g. hydrogen chloride HCl), nitrogen compounds (e.g. $NH_3$, HCN), sulfur compounds (e.g. $H_2S$, COS, $SO_x$), water, alkali and earth alkali compounds.

In general synthesis catalysts used in downstream processes are sensitive to poisoning. In particular sulfur and chlorine components have to be removed nearly completely. But also particles and tars can cause catalyst malfunctions due to fouling.

Typically, hydrogen chloride (HCl) removal is done using Ca- and Na-based sorbents, such as slaked lime ($Ca(OH)_2$), limestone ($CaCO_3$), or lime (CaO).

Typically, sulfur and chlorine components can be removed either by wet scrubbing or by dry adsorption processes as described above in connection with step e). An example for physical adsorption is the Rectisol process. For example chemical absorption can be done using amines (e.g. MEA, DEA) as liquid solvent. Typical examples for dry processes are the absorption of $H_2S$ on ZnO or removal of different impurities by activated carbon.

In a preferred embodiment the purification step g) is carried out by adsorption to a solid adsorbent, in particular zinc oxide (ZnO) or iron oxide (FeO), wherein preferably residual traces of HCl and/or $H_2S$ are removed.

Generally, such adsorption and adsorption processes are known by a skilled person and described in the state of the art, e.g. Ullmann's Encyclopedia of Industrial Chemistry, Wiley-VCH, 2011, Vol. 16, p. 525-533, Gas Production, 3. Gas Treating, Boll et al.

Process for the production of synthesis gas downstream products

Furthermore, the present invention is directed to a process for the production of synthesis gas downstream products, wherein the synthesis gas is produced by the inventive process as described above and used as an intermediate product in a downstream synthesis process for the production of downstream products (i.e. secondary products of synthesis gas), such as methanol, Fischer-Tropsch waxes, Fischer-Tropsch fuels, alcohols (from mixed alcohol synthesis), aldehydes (from hydroformylation) or methane (from methanation), preferably methanol.

In this aspect, the invention is directed to a process for the production of synthesis gas downstream products comprising the steps a) to g) as described above and

h) using the synthesis gas product stream obtained in step f) or g) in a downstream synthesis process, wherein at least one downstream synthesis product and an exhaust gas comprising carbon dioxide is obtained.

For example the downstream synthesis process is selected from methanol synthesis, mixed alcohol synthesis, Fischer-Tropsch synthesis, oxo-synthesis, and methanation.

Generally, such downstream synthesis process using synthesis gas are commonly known and described in the state of the art, such as the relevant chapters in Ullmann's Encyclopedia of Industrial Chemistry (for example Ullmann's Encyclopedia of Industrial Chemistry, Wiley VCH, 2011, Vol. 6 Bierhals, Carbon Monoxide, p. 679-693, e.g. p. 689, https://doi.org/10.1002/14356007.a05_203). In particular the synthesis of methanol by using synthesis gas is for example described in Ullmann's Encyclopedia of Industrial Chemistry, Wiley VCH, 2012, Ott et al., Methanol, p. 1-27, https://doi.org/10.1002/14356007.a16_465.pub3). For example the synthesis of carbon hydrogens via Fischer-Tropsch synthesis is described in Ullmann's Encyclopedia of Industrial Chemistry, Wiley VCH, 2011, Chapter 4, de Klerk, Fischer-Tropsch Synthesis, https://doi.org/10.1002/9783527635603.ch4). For example the production of aldehydes from alkenes using synthesis gas via oxo synthesis (also known as oxo process or hydroformylation) is described in Ullmann's Encyclopedia of Industrial Chemistry, Wiley VCH, 2013, Bahrmann et al., Oxo Synthesis, p. 1-8 https://doi.org/10.1002/14356007.a18_321.pub2).

Preferably, the exhaust gas comprising carbon dioxide obtained in downstream synthesis step h) can be recycled at least partially (preferably completely) back into the gasifier in step a).

In a preferred embodiment the synthesis gas product stream obtained in step f) or g) exhibits a synthesis gas ratio (molar ratio $H_2/CO$) in the range of 1:1 to 2.5:1, preferably 2.0:1 to 2.5:1, also preferably from 1.5:1 to 2.2:1, most preferably about 2:1, and it is used in a downstream synthesis process according to step h), preferably selected from methanol synthesis, mixed alcohol synthesis, Fischer-Tropsch synthesis, oxo-synthesis (also referred to as hydroformylation), and methanation.

In a preferred embodiment the inventive process comprises methanol synthesis as downstream synthesis process as step h).

In a preferred embodiment the process for the production of downstream synthesis products is directed to the production of methanol, wherein step h) is a methanol synthesis process and the synthesis gas obtained in step f) or g) has a synthesis gas ratio in the range of 2.0 : 1 to 2.5 : 1.

In a preferred embodiment the process for the production of downstream synthesis products is directed to the production of Fischer-Tropsch hydrocarbons, wherein step h) is a Fischer-Tropsch process and the synthesis gas obtained in step f) or g) has a synthesis gas ratio in the range 1.5 : 1 to 2.5 : 1, preferably 2.0 : 1 to 2.5 : 1.

Description of the figures

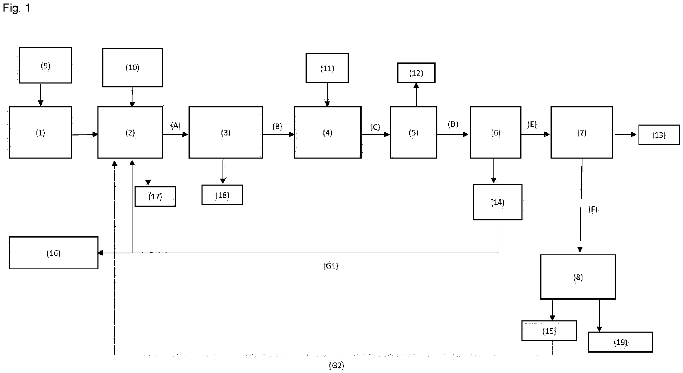

Fig. 1 shows a schematic flow chart of a preferred embodiment of the inventive gasification process, wherein the reference signs have the following meaning:

(1)    Optional pretreatment (e.g. drying) of feedstock (11) comprising carbon-containing material
(2)    Gasification
(3)    Solid removal (e.g. particulate filter)
(4)    Water-gas shift reaction (WGSR) or sour water-gas shift reaction
(5)    Removal of sulfur compounds, in particular H2S
(6)    $CO_2$ separation
(7)    Optional purification (e.g. removal of H2S / HCl traces)
(8)    Optional downstream synthesis process
(9)    Feedstock carbon material, e.g. solid feed
(10)    Optional fresh gasification gas

(11)     $H_2O$ shift gas
(12)     Purge (H2S)
(13)     Purge (H2S)
(14)     $CO_2$ exhaust gas
(15)     $CO_2$ exhaust gas
(16)     Variable purge stream ($CO_2$)
(17)     Purge solids
(18)     Purge solids
(19)     Downstream products
(A)      Raw synthesis gas
(B)      Cleaned synthesis gas
(C)      Modified synthesis gas
(D)      Desulfurized synthesis gas
(E)      Separated synthesis gas
(F)      Purified synthesis gas
(G1)     $CO_2$ recycling stream
(G2)     Optional $CO_2$ recycling stream

Figure 2 shows the O:C / H:C plot including compositions of suitable plastic solid waste (PSW) materials (points 1 to 5) and suitable feed stream compositions /operational compositions (points a to f). The grey area at bottom left (feedstock composition) covers a range $CH_{0.4-2.2}O_{0.0-0.7}$, the grey area at top right (operational compositions) covers a range $CH_{2.0-4.0}O_{1.0-1.7}$. The O:C / H:C plot (also referred to as van Krevelen plot) in figure 2 shows the atomic ratio of hydrogen to carbon (H:C) versus the atomic ratio of oxygen to carbon (O:C).

Figure 3 illustrates the method for determining the feed stream compositions /operational composition of point (a) starting from the solid plastic waste materials 1 to 5 via the addition of carbon dioxide and/or steam as gasifying agent.

Figure 4 illustrates the method for determining the feed stream compositions /operational composition of point (e) starting from the solid plastic waste materials according to points 1 to 5 via the addition of carbon dioxide and/or steam as gasifying agent.

The following examples are intended to illustrate the subject matter of the invention without restricting it thereto.

Examples

Example 1: Determination of process parameters

The following PSW materials were used as feedstock composition in order to set the range of atomic ratio H:C and O:C:

PP/PE          $CH_{2.0}O_{0.0}$ (theoretical composition),
               $CH_{1.94}O_{0.0}$ (based on ultimate analysis),

EU average     $CH_{1.84}O_{0.1}$

(Composition of the plastic material part from mean total municipal waste collected in the European Union EU-28)

PVA     $CH_{1.5}O_{0.5}$
PS      $CH_{1.0}O_{0.0}$
PET     $CH_{0.8}O_{0.4}$
PEEK    $CH_{0.6}O_{0.15}$

The following ranges for suitable feedstock materials were set: $CH_{0.4-2.2}O_{0.0-0.7}$. The following ranges for suitable operational compositions (feed stream compositions) were set: $CH_{2.0-4.0}O_{1.0-1.7}$

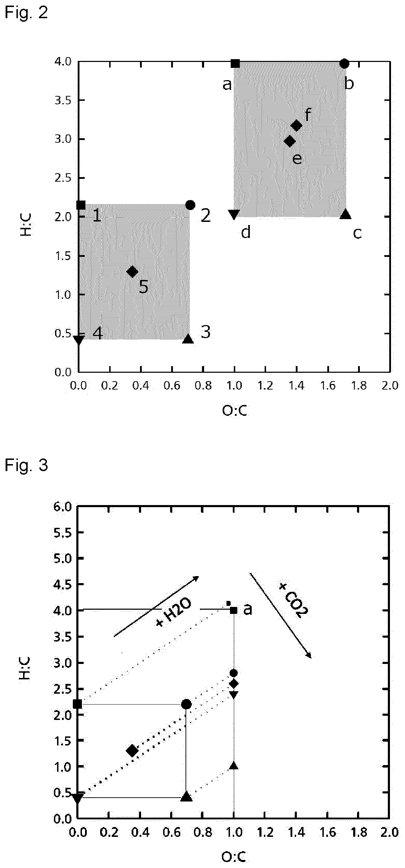

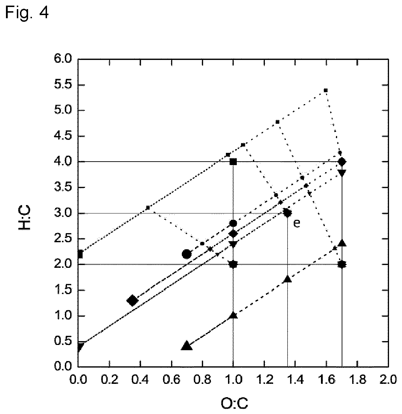

Preferred combinations of feedstock compositions (points 1 to 5 in figure 2) and operational compositions (points a to f in figure 2) were derived from O:C / H:C plot as exemplary illustrated in figures 3 and 4. Such O:C / H:C plots are commonly known and also referred to as van Krevelen plot (van Krevelen, D.W., 1957. Coal science: aspects of coal constitution. Elsevier Publishing Company, Amsterdam). The preferred combinations are summarized in the following table 1, wherein said combinations can preferably be used in plasma gasification process utilizing a mixture of carbon dioxide and stream as gasification agent.

Table 1: Example feedstock compositions and feed stream compositions

| Operational composition | | | Feedstock composition | | | Comb. |
|---|---|---|---|---|---|---|
| Point | O:C | H:C | Point | O:C | H:C | |
| a | 1.00 | 4.00 | 1 | 0.00 | 2.20 | a1 |
| b | 1.70 | 4.00 | 1 | 0.00 | 2.20 | b1 |
| | | | 2 | 0.70 | 2.20 | b2 |
| c | 1.70 | 2.00 | 1 | 0.00 | 2.20 | c1 |
| | | | 2 | 0.70 | 2.20 | c2 |
| | | | 3 | 0.70 | 0.40 | c3 |
| | | | 4 | 0.00 | 0.40 | c4 |
| | | | 5 | 0.35 | 1.30 | c5 |
| d | 1.00 | 2.00 | 1 | 0.00 | 2.20 | d1 |
| | | | 2 | 0.70 | 2.20 | d2 |
| | | | 4 | 0.00 | 0.40 | d4 |
| | | | 5 | 0.35 | 1.30 | d5 |
| e | 1.35 | 3.00 | 1 | 0.00 | 2.20 | e1 |
| | | | 2 | 0.70 | 2.20 | e2 |
| | | | 4 | 0.00 | 0.40 | e4 |
| | | | 5 | 0.35 | 1.30 | e5 |
| f | 1.40 | 3.20 | 1 | 0.00 | 2.20 | f1 |
| | | | 2 | 0.70 | 2.20 | f2 |
| | | | 5 | 0.35 | 1.30 | f5 |

Example 2: Plasma Gasification process

The process parameters as determined in example 1 and summarized in table 1 were used in plasma gasification process simulation (ASPEN One®) employing a non-stoichiometric equilibrium model, wherein the equilibrium composition was calculated by minimization of the total Gibbs free energy of the system $Gs$.

The gasification process was based on a process as described in flow chart of figure 1. The following exemplary conditions were used:

(1) The pretreatment step (reference sign (1) in figure 1) was not implemented in ASPEN One®
(2) Gasification (implemented as RYIELD and RGIBBS):

Gasification temperature (temperature of the raw synthesis gas at the outlet of gasifier) T (gas) = 1400 K,
Pressure in gasifier p(gas) = 1 bar
Water content of feedstock (9): 0 % by weight
Gasification agent: $CO_2$ and steam

(3) The solid removal step was not implemented in ASPEN
(4) Water Gas Shift + Sour Gas Shift (implemented as REQUIIL):

Temperature in Sour Water Gas Shift T(gas) = 673 K
Pressure in Sour Water Gas Shift p(gas) = 1 bar

(5)+(6) Removal of $H_2S$ and $CO_2$ separation (implemented as Sep):

Two-stage gas scrubber using amine scrubbing solvent, for removal of $H_2S$ and $CO_2$ capture for $CO_2$-recycling (G1) and/or $CO_2$ purge (16) Temperature of gas T(gas) = 313 K
Pressure of gas p(gas) = 1 bar
Carbon capture efficiency for (G1) is 98 %

(7) Purification of synthesis gas (implemented as Sep):
Purification using zinc oxide (ZnO) guard bed as solid adsorbents, removal of residual traces of HCl and $H_2S$
(8) Optional downstream process (not implemented)
e.g. Methanol synthesis

The results for all possible combinations of feedstock composition (1-5) and operational compositions (a-f) are summarized in table 5. It is shown in table 5 that the desired operational compositions (O:C and H:C ratios) were obtained for the combinations of table 1. The obtained operational compositions for all other combinations are summarized in table 5.

The results for the preferred combinations according to table 1 are summarized in the following tables 2 and 3.

In the tables 2 to 5 "mol/mol(FS)" means "mol/mol(feedstock)".

Table 2: Results - part I

| No. | Feedstock composition | | | | | Gasification agent | |
|-----|------|------|------|------|------|------|------|
| | O:C | H:C | C | H | O | Added $CO_2$ | Added $H_2O$ |
| | | | mol % in feedstock | | | mol/mol(FS) | mol/mol(FS) |
| a1 | 0.00 | 2.20 | 0.31 | 0.69 | 0.00 | 0.01 | 0.30 |
| b1 | 0.00 | 2.20 | 0.31 | 0.69 | 0.00 | 0.11 | 0.50 |
| b2 | 0.70 | 2.20 | 0.26 | 0.56 | 0.18 | 0.01 | 0.25 |
| c1 | 0.00 | 2.20 | 0.31 | 0.69 | 0.00 | 0.43 | 0.40 |
| c2 | 0.70 | 2.20 | 0.26 | 0.56 | 0.18 | 0.22 | 0.19 |
| c3 | 0.70 | 0.40 | 0.48 | 0.19 | 0.33 | 0.07 | 0.45 |
| c4 | 0.00 | 0.40 | 0.71 | 0.29 | 0.00 | 0.49 | 1.07 |
| c5 | 0.35 | 1.30 | 0.38 | 0.49 | 0.13 | 0.29 | 0.42 |
| d1 | 0.00 | 2.20 | 0.31 | 0.69 | 0.00 | 0.17 | 0.14 |
| d2 | 0.70 | 2.20 | 0.26 | 0.56 | 0.18 | 0.05 | 0.03 |
| d4 | 0.00 | 0.40 | 0.71 | 0.29 | 0.00 | 0.07 | 0.64 |
| d5 | 0.35 | 1.30 | 0.38 | 0.49 | 0.13 | 0.06 | 0.19 |
| e1 | 0.00 | 2.20 | 0.31 | 0.69 | 0.00 | 0.14 | 0.33 |
| e2 | 0.70 | 2.20 | 0.26 | 0.56 | 0.18 | 0.03 | 0.15 |
| e4 | 0.00 | 0.40 | 0.71 | 0.29 | 0.00 | 0.02 | 0.95 |
| e5 | 0.35 | 1.30 | 0.38 | 0.49 | 0.13 | 0.03 | 0.36 |
| f1 | 0.00 | 2.20 | 0.31 | 0.69 | 0.00 | 0.13 | 0.36 |
| f2 | 0.70 | 2.20 | 0.26 | 0.56 | 0.18 | 0.02 | 0.17 |
| f5 | 0.35 | 1.30 | 0.38 | 0.49 | 0.13 | 0.02 | 0.39 |

Table 3: Results - part II

| No. | Total $CO_2$ mol/mol (FS) | Yield Y mol% | rCO2 (with recycling) mol/mol(FS) | eCO2 (with recycling) mol/mol(FS) | CE1 (with recycling) mol% | CE2 (without recycling) mol% |
|---|---|---|---|---|---|---|
| a1 | 0.00 | 0.996 | 0.00 | 0.00 | -2.89 | 0.36 |
| b1 | 0.22 | 0.631 | 0.11 | 0.11 | 58.51 | 113.64 |
| b2 | 0.14 | 0.488 | 0.01 | 0.13 | 104.74 | 113.64 |
| c1 | 0.44 | 0.968 | 0.43 | 0.01 | 3.35 | 146.45 |
| c2 | 0.28 | 0.749 | 0.22 | 0.06 | 33.50 | 146.45 |
| c3 | 0.33 | 0.468 | 0.07 | 0.26 | 113.60 | 146.45 |
| c4 | 0.72 | 0.687 | 0.49 | 0.23 | 45.63 | 146.45 |
| c5 | 0.40 | 0.718 | 0.29 | 0.11 | 39.30 | 146.45 |
| d1 | 0.17 | 0.985 | 0.17 | 0.00 | -1.82 | 52.46 |
| d2 | 0.10 | 0.796 | 0.05 | 0.05 | 25.07 | 50.18 |
| d4 | 0.26 | 0.735 | 0.07 | 0.19 | 35.49 | 49.09 |
| d5 | 0.14 | 0.767 | 0.06 | 0.08 | 29.90 | 49.46 |
| e1 | 0.14 | 0.999 | 0.14 | 0.00 | -0.13 | 43.64 |
| e2 | 0.09 | 0.781 | 0.03 | 0.06 | 27.96 | 42.83 |
| e4 | 0.22 | 0.716 | 0.02 | 0.20 | 39.59 | 42.83 |
| e5 | 0.12 | 0.749 | 0.03 | 0.09 | 33.52 | 42.83 |
| f1 | 0.15 | 0.934 | 0.13 | 0.02 | 7.03 | 50.82 |
| f2 | 0.09 | 0.723 | 0.02 | 0.07 | 38.26 | 50.82 |
| f5 | 0.13 | 0.693 | 0.02 | 0.11 | 44.27 | 50.82 |

The parameters given in table 2 and 3 are as defined in the following:
"Total CO2" is the total molar amount (or molar flow) of $CO_2$ in the product stream obtained in the process after water-gas shift reaction in step d) given in mol/mol(feedstock) (mol/mol(FS)). The carbon capture efficiency is 98 % for step f) employing gas scrubbing with an amine solvent, i.e. the molar amount of the exhaust gas obtained in the $CO_2$ separation step (step f) is 98 % of "total CO2" ("total CO2" times 0.98).
"Yield Y" is given by the following formula (I):

$$Y = \frac{Molar\ flow\ CO}{Molar\ flow\ C\ in\ feedstock + (Added\ molar\ flow\ CO2 - (Total\ molar\ flow\ of\ CO2 * 0.98))} \quad (I).$$

with

"Molar flow CO" is the molar flow of CO (given in mol/mol (feedstock)) in the synthesis gas product stream obtained in the process; and
"Molar flow C in feedstock" is the molar amount of carbon in the added feedstock based on ultimate analysis (plastic solid waste compositions 1 to 5) (given in mol/mol(feedstock)).

The term in brackets in formula (I) is only relevant for examples which requires the addition of external $CO_2$ (negative values for CE1).
"rCO2" is the recycled $CO_2$ stream (given in mol/mol(feedstock)) recycled into the gasification step a). rCO2 = Added CO2, if Added $CO_2$ < Total CO2, rCO2 = Total CO2, if Added CO2 > Total CO2. In case that Added CO2 > Total $CO_2$ external $CO_2$ need to be added. In this preferred embodiments it is possible to use the inventive process as carbon sink.

"eCO2" is the $CO_2$ emission (given in mol/mol(feedstock)) with recycling of the $CO_2$ exhaust stream obtained by the process at least partly into the gasification step a). eCO2 is given by eCO2 = Total molar flow $CO_2$ - Added molar flow CO2.

"CE1" (given in %) is the $CO_2$ emission per mole CO obtained in the synthesis gas with recycling of $CO_2$ (recycling of exhaust stream obtained in step f) at least partly into the gasification step a). CE1 is given by the following formula (II):

$$CE1 = \frac{Total\ molar\ flow\ CO2 - Added\ molar\ flow\ of\ CO2}{Molar\ flow\ of\ CO} \quad \text{(II)},$$

"Molar flow CO" is the molar flow of CO (given in mol/mol (feedstock)) in the synthesis gas product stream obtained in the process.

Negative values for "CE1" in table 3 mean that it is necessary to add $CO_2$ from an external $CO_2$ source.

"CE2" (given in %) is the $CO_2$ emission per mole CO obtained via the synthesis gas product without recycling of $CO_2$. CE2 is given by the following formula (III):

$$CE2 = \frac{Total\ molar\ flow\ of\ CO2}{Molar\ flow\ of\ CO} \quad \text{(III)},$$

with "Molar flow CO" is the molar flow of CO (given in mol/mol (feedstock)) in the synthesis gas product stream obtained in the process.

The compositions of the gasification agent and recycling rates are summarized in table 4 for the examples with recycling of carbon dioxide (recycling of exhaust gas obtained in step f) at least partially into the gasifier in step a).

Table 4: Composition of gasification agent and recycling rate

| No. | Added CO2 mol/mol (FS) | Added H2O | Total CO2 | Gasification agent | | Recycling rate % |
|---|---|---|---|---|---|---|
| | | | | CO2 mol% | H2O mol% | |
| a1 | 0.01 | 0.30 | 0.00 | 3.23 | 96.77 | 100.00 |
| b1 | 0.11 | 0.50 | 0.22 | 18.03 | 81.97 | 50.00 |
| b2 | 0.01 | 0.25 | 0.14 | 3.85 | 96.15 | 7.14 |
| c1 | 0.43 | 0.40 | 0.44 | 51.81 | 48.19 | 97.73 |
| c2 | 0.22 | 0.19 | 0.28 | 53.66 | 46.34 | 78.57 |
| c3 | 0.07 | 0.45 | 0.33 | 13.46 | 86.54 | 21.21 |
| c4 | 0.49 | 1.07 | 0.72 | 31.41 | 68.59 | 68.06 |
| c5 | 0.29 | 0.42 | 0.40 | 40.85 | 59.15 | 72.50 |
| d1 | 0.17 | 0.14 | 0.17 | 54.84 | 45.16 | 100.00 |
| d2 | 0.05 | 0.03 | 0.10 | 62.50 | 37.50 | 50.00 |
| d4 | 0.07 | 0.64 | 0.26 | 9.86 | 90.14 | 26.92 |
| d5 | 0.06 | 0.19 | 0.14 | 24.00 | 76.00 | 42.86 |
| e1 | 0.14 | 0.33 | 0.14 | 29.79 | 70.21 | 100.00 |
| e2 | 0.03 | 0.15 | 0.09 | 16.67 | 83.33 | 33.33 |
| e4 | 0.02 | 0.95 | 0.22 | 2.06 | 97.94 | 9.09 |
| e5 | 0.03 | 0.36 | 0.12 | 7.69 | 92.31 | 25.00 |
| f1 | 0.13 | 0.36 | 0.15 | 26.53 | 73.47 | 86.67 |
| f2 | 0.02 | 0.17 | 0.09 | 10.53 | 89.47 | 22.22 |

(continued)

| No. | Added CO2 mol/mol (FS) | Added H2O | Total CO2 | Gasification agent CO2 mol% | H2O mol% | Recycling rate % |
|-----|------------------------|-----------|-----------|------------|----------|-------------------|
| f5 | 0.02 | 0.39 | 0.13 | 4.88 | 95.12 | 15.38 |

The $CO_2$ in the gasification agent is completely recycled CO2.

The recycling rate (given in %) is the internal recycling rate of the process defined as:

$$Recycling\ Rate = \frac{rCO2}{Total\ CO2} * 100\ \%.$$

Table 5 shows the simulation results for all combinations 1-5 and a-f. The amounts of $CO_2$ and $H_2O$ are given as mol/mol (Feedstock) [mol/mol(FS)].

Table 5: Parameters and results for process simulation

| No | Feedstock composition | | | | | Gasification agent | | Total CO2 mol / mol(FS) | Yield Y | CE1 (with recycl.) mol% | CE2 (without recycl.) mol% | Desired op. comp. | | Obtained op. comp. | |
|---|---|---|---|---|---|---|---|---|---|---|---|---|---|---|---|
| | O:C | H:C | C | H | O | Added CO2 | Added H2O | | | | | O:C | H:C | O:C | H:C |
| | | | mol% in feedstock | | | mol / mol(FS) | | | | | | | | | |
| a1 | 0.00 | 2.20 | 0.31 | 0.69 | 0.00 | 0.01 | 0.30 | 0.00 | 0.996 | -2.89 | 0.36 | 1.00 | 4.00 | 1.00 | 4.00 |
| a2 | 0.70 | 2.20 | 0.26 | 0.56 | 0.18 | 0.00 | 0.08 | 0.05 | 0.796 | 25.16 | 25.16 | 1.00 | 4.00 | 1.00 | 2.80 |
| a3 | 0.70 | 0.40 | 0.48 | 0.19 | 0.33 | 0.00 | 0.14 | 0.23 | 0.509 | 95.90 | 95.90 | 1.00 | 4.00 | 1.00 | 1.00 |
| a4 | 0.00 | 0.40 | 0.71 | 0.29 | 0.00 | 0.00 | 0.71 | 0.19 | 0.731 | 36.25 | 36.25 | 1.00 | 4.00 | 1.00 | 2.40 |
| a5 | 0.35 | 1.30 | 0.38 | 0.49 | 0.13 | 0.00 | 0.25 | 0.08 | 0.788 | 26.44 | 26.44 | 1.00 | 4.00 | 1.00 | 2.60 |
| b1 | 0.00 | 2.20 | 0.31 | 0.69 | 0.00 | 0.11 | 0.50 | 0.22 | 0.631 | 58.51 | 113.64 | 1.70 | 4.00 | 1.70 | 4.00 |
| b2 | 0.70 | 2.20 | 0.26 | 0.56 | 0.18 | 0.01 | 0.25 | 0.14 | 0.488 | 104.74 | 113.64 | 1.70 | 4.00 | 1.70 | 4.00 |
| b3 | 0.70 | 0.40 | 0.48 | 0.19 | 0.33 | 0.00 | 0.48 | 0.28 | 0.420 | 137.94 | 137.94 | 1.70 | 4.00 | 1.70 | 2.40 |
| b4 | 0.00 | 0.40 | 0.71 | 0.29 | 0.00 | 0.00 | 1.21 | 0.38 | 0.463 | 116.07 | 116.07 | 1.70 | 4.00 | 1.70 | 3.80 |
| b5 | 0.35 | 1.30 | 0.38 | 0.49 | 0.13 | 0.00 | 0.51 | 0.20 | 0.468 | 113.64 | 113.64 | 1.70 | 4.00 | 1.70 | 4.00 |
| c1 | 0.00 | 2.20 | 0.31 | 0.69 | 0.00 | 0.43 | 0.40 | 0.44 | 0.968 | 3.35 | 146.45 | 1.70 | 2.00 | 1.70 | 2.00 |
| c2 | 0.70 | 2.20 | 0.26 | 0.56 | 0.18 | 0.22 | 0.19 | 0.28 | 0.749 | 33.50 | 146.45 | 1.70 | 2.00 | 1.70 | 2.00 |
| c3 | 0.70 | 0.40 | 0.48 | 0.19 | 0.33 | 0.07 | 0.45 | 0.33 | 0.468 | 113.60 | 146.45 | 1.70 | 2.00 | 1.70 | 2.00 |
| c4 | 0.00 | 0.40 | 0.71 | 0.29 | 0.00 | 0.49 | 1.07 | 0.72 | 0.687 | 45.63 | 146.45 | 1.70 | 2.00 | 1.70 | 2.00 |
| c5 | 0.35 | 1.30 | 0.38 | 0.49 | 0.13 | 0.29 | 0.42 | 0.40 | 0.718 | 39.30 | 146.45 | 1.70 | 2.00 | 1.70 | 2.00 |
| d1 | 0.00 | 2.20 | 0.31 | 0.69 | 0.00 | 0.17 | 0.14 | 0.17 | 0.985 | -1.82 | 52.46 | 1.00 | 2.00 | 1.00 | 2.00 |
| d2 | 0.70 | 2.20 | 0.26 | 0.56 | 0.18 | 0.05 | 0.03 | 0.10 | 0.796 | 25.07 | 50.18 | 1.00 | 2.00 | 1.00 | 2.00 |
| d3 | 0.70 | 0.40 | 0.48 | 0.19 | 0.33 | 0.00 | 0.14 | 0.24 | 0.495 | 101.52 | 101.52 | 1.00 | 2.00 | 1.00 | 1.00 |
| d4 | 0.00 | 0.40 | 0.71 | 0.29 | 0.00 | 0.07 | 0.64 | 0.26 | 0.735 | 35.49 | 49.09 | 1.00 | 2.00 | 1.00 | 2.00 |
| d5 | 0.35 | 1.30 | 0.38 | 0.49 | 0.13 | 0.06 | 0.19 | 0.14 | 0.767 | 29.90 | 49.46 | 1.00 | 2.00 | 1.00 | 2.00 |
| e1 | 0.00 | 2.20 | 0.31 | 0.69 | 0.00 | 0.14 | 0.33 | 0.14 | 0.999 | -0.13 | 43.64 | 1.35 | 3.00 | 1.35 | 3.00 |
| e2 | 0.70 | 2.20 | 0.26 | 0.56 | 0.18 | 0.03 | 0.15 | 0.09 | 0.781 | 27.96 | 42.83 | 1.35 | 3.00 | 1.35 | 3.00 |
| e3 | 0.70 | 0.40 | 0.48 | 0.19 | 0.33 | 0.00 | 0.31 | 0.24 | 0.496 | 101.63 | 101.63 | 1.35 | 3.00 | 1.35 | 1.70 |

(continued)

| No | Feedstock composition | | | | | Gasification agent | | | Yield Y | CE1 (with recycl.) mol% | CE2 (without recycl.) mol% | Desired op. comp. | | Obtained op. comp. | |
| | O:C | H:C | C | H | O | Added CO2 mol / mol(FS) | Added H2O mol / mol(FS) | Total CO2 mol / mol(FS) | | | | O:C | H:C | O:C | H:C |
| | | | mol% in feedstock | | | | | | | | | | | | |
| e4 | 0.00 | 0.40 | 0.71 | 0.29 | 0.00 | 0.02 | 0.95 | 0.22 | 0.716 | 39.59 | 42.83 | 1.35 | 3.00 | 1.35 | 3.00 |
| e5 | 0.35 | 1.30 | 0.38 | 0.49 | 0.13 | 0.03 | 0.36 | 0.12 | 0.749 | 33.52 | 42.83 | 1.35 | 3.00 | 1.35 | 3.00 |
| f1 | 0.00 | 2.20 | 0.31 | 0.69 | 0.00 | 0.13 | 0.36 | 0.15 | 0.934 | 7.03 | 50.82 | 1.40 | 3.20 | 1.40 | 3.20 |
| f2 | 0.70 | 2.20 | 0.26 | 0.56 | 0.18 | 0.02 | 0.17 | 0.09 | 0.723 | 38.26 | 50.82 | 1.40 | 3.20 | 1.40 | 3.20 |
| f3 | 0.70 | 0.40 | 0.48 | 0.19 | 0.33 | 0.00 | 0.33 | 0.24 | 0.498 | 100.96 | 100.96 | 1.40 | 3.20 | 1.40 | 1.80 |
| f4 | 0.00 | 0.40 | 0.71 | 0.29 | 0.00 | 0.00 | 1.00 | 0.24 | 0.663 | 50.82 | 50.82 | 1.40 | 3.20 | 1.40 | 3.20 |
| f5 | 0.35 | 1.30 | 0.38 | 0.49 | 0.13 | 0.02 | 0.39 | 0.13 | 0.693 | 44.27 | 50.82 | 1.40 | 3.20 | 1.40 | 3.20 |

**Claims**

1. A process for the production of synthesis gas by gasification of carbon-containing material comprising the steps:

    a) feeding a feedstock, comprising at least one carbon-containing material, and a gasification agent, comprising at least 2 mol% carbon dioxide and optionally at least one gas, selected from steam, oxygen, hydrogen, methane and air, as feed stream into a gasifier and supplying external energy obtained from electric power, wherein a product stream comprising raw synthesis gas is generated;

    b) removing the raw synthesis gas as product stream from the gasifier and optionally cooling the product stream;

    c) separating the solid ingredients from the gaseous ingredients in the raw synthesis gas product stream;

    d) feeding the product stream obtained in step c) into a water-gas shift reactor, wherein a part of the carbon monoxide of the synthesis gas is transformed together with steam into hydrogen and carbon dioxide and wherein a modified synthesis gas product stream is obtained;

    e) optionally removing sulfur compounds from the modified product stream in a desulfurizing step;

    f) removing and separating carbon dioxide at least partially from the modified product stream obtained in step d) or e), wherein an exhaust gas comprising carbon dioxide and a separated synthesis gas product stream are obtained;

    g) optionally further purification of the separated synthesis gas product stream obtained in step f);

    wherein the exhaust gas comprising carbon dioxide obtained in step f) is at least partially recycled back into the gasifier in step a).

2. The process according to claim 1, wherein the external energy supplied in step a) is obtained from renewably generated electric power.

3. The process according to claim 1 or 2, wherein the external energy is supplied in the gasifier in step a) in form of a plasma, preferably an arc plasma.

4. The process according to any of claims 1 to 3, wherein the feedstock comprises at least one carbon-containing material selected from plastic solid waste, non-recyclable waste materials, and waste materials from chemical industry processes, preferably at least one carbon-containing material selected from plastic solid waste.

5. The process according to any of claims 1 to 4, wherein the feedstock exhibits an atomic ratio of O:C in the range of 0.0 to 0.7; preferably in the range of 0.0 to 0.1; and/or an atomic ratio H:C in the range of 0.4 to 2.2; preferably in the range of 1.8 to 2.2.

6. The process according to any of claims 1 to 5, wherein the gasification agent used in step a) comprises from 2 to 70 mol% carbon dioxide and from 30 to 98 mol% of at least one gas selected from steam, hydrogen and methane.

7. The process according to any of claims 1 to 6, wherein the gasification agent used in step a) comprises:

    2 to 70 mol%, preferably 5 to 65 mol%, more preferably 20 to 60 mol%, of carbon dioxide;

    30 to 98 mol%, preferably 35 to 95 mol%, more preferably 40 to 80 mol%, of steam; and

    0 to 5 mol%, preferably 0 to 2 mol%, more preferably 0 to 1 mol%, of further gaseous components.

8. The process according to any of claims 1 to 7, wherein the feed stream, which is used in gasification step a) and which comprises the feedstock and the gasification agent, exhibits an atomic ratio of O:C in the range of 1.0 to 1.7; preferably in the range of 1.2 to 1.5; and/or an atomic ratio H:C in the range of 2.0 to 4.0; preferably in the range of 3.0 to 3.4.

9. The process according to any of claims 1 to 8, wherein the gasification in step a) is carried out at a temperature in the range of 500 K to 2,000 K.

10. The process according to any of claims 1 to 9, wherein the gasification in step a) is carried out at a temperature above 1,400 K, and wherein the external energy is supplied in the gasifier in step a) in form of a plasma, preferably an arc plasma.

11. The process according to any of claims 1 to 10, wherein step d) is carried out as a sour water gas shift reaction, wherein the product stream obtained in step c) is fed into a water-gas shift reactor, optionally together with steam, wherein a part of the carbon monoxide of the synthesis gas is transformed together with steam into carbon dioxide and wherein at least a part of the organic sulfur compounds, which are comprised in the synthesis gas, are transformed together with steam into hydrogen sulfide.

12. The process according to any of claims 1 to 11, wherein 70 to 100 mol% of the exhaust gas comprising carbon dioxide obtained in step f) is recycled into the gasifier in step (a).

13. The process according to any of claims 1 to 12, wherein the process exhibits a carbon dioxide emission, based on the molar amount of carbon monoxide obtained via the synthesis gas product, from 0 to 10 mol%.

14. The process according to any of claims 1 to 13, wherein the synthesis gas product stream obtained in step f) or g) exhibits a synthesis gas ratio ($H_2$/CO) in the range of 1:1 to 2.5:1.

15. Process for the production of synthesis gas downstream products comprising the steps a) to g) as described in any of claim 1 to 14 and step h):
    h) using the synthesis gas product stream obtained in step f) or g) in a downstream synthesis process, wherein at least one downstream synthesis product and an exhaust gas comprising carbon dioxide is obtained.

Fig. 1

Fig. 2

Fig. 3

Fig. 4

Europäisches
Patentamt

European
Patent Office

Office européen
des brevets

# EUROPEAN SEARCH REPORT

Application Number

EP 20 16 2983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/003900 A1 (YAGI FUYUKI [JP] ET AL) 6 January 2011 (2011-01-06) * paragraph [0030] - paragraphs [0032], [0046] * * paragraph [0071] - paragraph [0074]; figure 1 * ----- | 1,2,5-9, 12-15 | INV. C01B3/50 C01B3/48 C01B3/34 C10J3/60 |
| X,D | US 2015/141536 A1 (ZHANG YANFENG [CN] ET AL) 21 May 2015 (2015-05-21) * paragraph [0038] - paragraph [0046]; figure 1 * ----- | 1-3, 5-10, 12-15 | |
| X | US 2013/203142 A1 (YOUNG GARY C [US]) 8 August 2013 (2013-08-08) * paragraphs [0010], [0063] - paragraph [0067]; claim 1; figure 11 * ----- | 1-15 | |
| X | US 2009/151252 A1 (YOUNG GARY C [US]) 18 June 2009 (2009-06-18) * paragraph [0023] - paragraph [0025]; claims 1,2; figures 1,2 * ----- | 1-15 | |

TECHNICAL FIELDS
SEARCHED        (IPC)

C01B
C10J

The present search report has been drawn up for all claims

| Place of search | Date of completion of the search | Examiner |
|---|---|---|
| Munich | 2 September 2020 | Cristescu, Ioana |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 20 16 2983

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2020

| Patent document cited in search report | | Publication date | Patent family member(s) | | Publication date |
|---|---|---|---|---|---|
| US 2011003900 | A1 | 06-01-2011 | AU | 2009224187 A1 | 17-09-2009 |
| | | | BR | PI0910334 A2 | 06-10-2015 |
| | | | CA | 2718506 A1 | 17-09-2009 |
| | | | CN | 101970344 A | 09-02-2011 |
| | | | EA | 201071079 A1 | 29-04-2011 |
| | | | EG | 26230 A | 02-05-2013 |
| | | | EP | 2253585 A1 | 24-11-2010 |
| | | | JP | 5424566 B2 | 26-02-2014 |
| | | | JP | 2009221036 A | 01-10-2009 |
| | | | MY | 150064 A | 29-11-2013 |
| | | | US | 2011003900 A1 | 06-01-2011 |
| | | | WO | 2009113714 A1 | 17-09-2009 |
| | | | ZA | 201006261 B | 25-05-2011 |
| US 2015141536 | A1 | 21-05-2015 | AU | 2013302099 A1 | 05-03-2015 |
| | | | CA | 2881327 A1 | 13-02-2014 |
| | | | CN | 102796561 A | 28-11-2012 |
| | | | DK | 2883940 T3 | 21-01-2019 |
| | | | EP | 2883940 A1 | 17-06-2015 |
| | | | JP | 5965073 B2 | 03-08-2016 |
| | | | JP | 2015524504 A | 24-08-2015 |
| | | | KR | 20150027830 A | 12-03-2015 |
| | | | RU | 2015108053 A | 10-10-2016 |
| | | | US | 2015141536 A1 | 21-05-2015 |
| | | | US | 2016376513 A1 | 29-12-2016 |
| | | | WO | 2014023149 A1 | 13-02-2014 |
| US 2013203142 | A1 | 08-08-2013 | EP | 2812276 A1 | 17-12-2014 |
| | | | US | 2013203142 A1 | 08-08-2013 |
| | | | WO | 2013119263 A1 | 15-08-2013 |
| US 2009151252 | A1 | 18-06-2009 | BR | PI0820031 A2 | 26-05-2015 |
| | | | EP | 2217554 A1 | 18-08-2010 |
| | | | ES | 2602330 T3 | 20-02-2017 |
| | | | HU | E030939 T2 | 28-06-2017 |
| | | | JP | 5406208 B2 | 05-02-2014 |
| | | | JP | 2011508795 A | 17-03-2011 |
| | | | PL | 2217554 T3 | 31-08-2017 |
| | | | US | 2009151252 A1 | 18-06-2009 |
| | | | US | 2011186783 A1 | 04-08-2011 |
| | | | US | 2013331469 A1 | 12-12-2013 |
| | | | US | 2015099294 A1 | 09-04-2015 |
| | | | US | 2017321135 A1 | 09-11-2017 |
| | | | WO | 2009076138 A1 | 18-06-2009 |

EPO FORM P0459

For more details about this annex : see Official Journal of the European Patent Office, No. 12/82

EP 3 878 807 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015051893 A1
- EP 2915869 A1
- DE 102011051906 A1
- EP 1419220 B1
- WO 201239751 A2
- US 20100199557 A1
- WO 2018187741 A
- WO 2017061482 A
- US 9181509 B
- WO 2012103997 A1
- JP 2011208513 A
- US 20150141536 A1

### Non-patent literature cited in the description

- **CHAIWATANODOM et al.** Thermodynamic analysis of biomass gasification with CO2 recycle for synthesis gas production. *Applied Energy,* 2014, vol. 114, 10-17
- Ullmann's Encyclopedia of Industrial Chemistry. Wiley-VCH, 2011, vol. 16, 483-493
- Ullmann's Encyclopedia of Industrial Chemistry. Wiley-VCH, 2011, vol. 16, 498-535
- Ullmann's Encyclopedia of Industrial Chemistry. Wiley-VCH, 2011, vol. 16, 525-533
- Ullmann's Encyclopedia of Industrial Chemistry
- Bierhals, Carbon Monoxide. Ullmann's Encyclopedia of Industrial Chemistry. Wiley VCH, 2011, vol. 6, 679-693
- Methanol. **OTT et al.** Ullmann's Encyclopedia of Industrial Chemistry. Wiley VCH, 2012, 1-27
- Ullmann's Encyclopedia of Industrial Chemistry. Wiley VCH, 2011
- Oxo Synthesis. **BAHRMANN et al.** Ullmann's Encyclopedia of Industrial Chemistry. Wiley VCH, 2013, 1-8
- **VAN KREVELEN, D.W.** Coal science: aspects of coal constitution. Elsevier Publishing Company, 1957